# EUROPEAN PATENT APPLICATION

(11) **EP 4 181 246 A1**
(43) Date of publication of application: **17.05.2023**
(21) Application number: 22205244.1
(22) Date of filing: 03.11.2022
(51) Int. Cl.: H01M 8/0282, C03C 8/24

(54) **FUEL CELL STACKS INCLUDING IMPROVED DIELECTRIC LAYERS**

(30) Priority: 11.11.2021 US 202163278376 P; 10.06.2022 US 202263351104 P
(71) Applicant: Bloom Energy Corporation, San Jose, CA 95134 (US)
(72) Inventor: EL BATAWI, Emad, San Jose, CA 95134 (US); NALLABOLU, Madhuri, San Jose, CA 95134 (US); GASDA, Michael, San Jose, CA 95134 (US); NIKONG, Patrick, San Jose, CA 95134 (US); KARUPPAIAH, Chockkalingam, San Jose, CA 95134 (US); ELLEGOOD, Allyson, San Jose, CA 95134 (US); MUHL, Thuy Thanh, San Jose, CA 95134 (US)
(74) Representative: Wichmann, Hendrik

(57) **Abstract**

A fuel cell stack includes stacked solid oxide fuel cells, interconnects disposed between the fuel cells, and dielectric layers disposed on the interconnects and including a first glass-containing component and a corrosion barrier material. Optionally, the dielectric layers may cover only a portion of the interconnect riser seal surfaces which are covered by riser seals. Additionally or alternatively, the fuel cell stack may include an electrolyte reinforcement layer on the electrolyte of the solid oxide fuel cells.

## Description

### FIELD

The present disclosure is directed to fuel cell dielectric layers, and in particular to dielectric layers that include an amorphous component.

### BACKGROUND

In a high temperature fuel cell system, such as a solid oxide fuel cell (SOFC) system, an oxidizing flow is passed through the cathode side of the fuel cell while a fuel flow is passed through the anode side of the fuel cell. The oxidizing flow is typically air, while the fuel flow can be a hydrocarbon fuel, such as methane, natural gas, pentane, ethanol, or methanol. The fuel cell, operating at a typical temperature between 750°C and 950°C, enables the transport of negatively charged oxygen ions from the cathode flow stream to the anode flow stream, where the ion combines with either free hydrogen or hydrogen in a hydrocarbon molecule to form water vapor and/or with carbon monoxide to form carbon dioxide. The excess electrons from the negatively charged ion are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and air is distributed to each cell using risers contained within the stack. In other words, the gas flows through openings or holes in the supporting layer of each fuel cell, such as the electrolyte layer, and gas flow separator of each cell. In externally manifolded stacks, the stack is open on the fuel and air inlet and outlet sides, and the fuel and air are introduced and collected independently of the stack hardware. For example, the inlet and outlet fuel and air flow in separate channels between the stack and the manifold housing in which the stack is located.

Fuel cell stacks are frequently built from a multiplicity of cells in the form of planar elements, tubes, or other geometries. Fuel and air has to be provided to the electrochemically active surface, which can be large. One component of a fuel cell stack is the so called gas flow separator (referred to as a gas flow separator plate in a planar stack) that separates the individual cells in the stack. The gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. In this case, the gas flow separator plate which functions as an interconnect is made of or contains an electrically conductive material.

### SUMMARY

According to various embodiments of the present disclosure, a fuel cell stack comprises: stacked solid oxide fuel cells; interconnects disposed between the fuel cells; and dielectric layers disposed on the interconnects, the dielectric layers comprising a first glass-containing component and a corrosion barrier material, wherein, the dielectric layer has a first glass-containing component to corrosion barrier material weight ratio ranging from about 5:95 to about 60:40, the first glass-containing component is at least 50% (e.g., by volume) amorphous, after sintering at a temperature ranging from about 950 °C to about 1050 °C, for a time period of at least 15 minutes, and the corrosion barrier material comprises zirconium silicate (ZrSiO₄)), potash feldspar (KAlSi₃O₈), alumina (Al₂O3), lanthanum trisilicate (La₂Si₃O₉), silicon carbide, or any combination thereof.

According to various embodiments of the present disclosure, a fuel cell stack comprises: stacked solid oxide fuel cells, each fuel cell comprising an anode, a cathode, and an electrolyte disposed between the anode and the cathode; cross flow interconnects containing fuel holes and disposed between the fuel cells; peripheral seals disposed between fuel sides of the interconnects and fuel sides of the fuel cells; riser seals surrounding the fuel holes disposed between air sides of the interconnects and air sides of the fuel cells; and electrolyte reinforcement layers disposed directly on the electrolytes and comprising at least one of yttria-stabilized zirconia (YSZ), scandia-stabilized zirconia (SSZ), magnesia, zirconia, ZrSiO₄, alumina, or a combination thereof.

According to various embodiments of the present disclosure, a fuel cell stack comprises: stacked solid oxide fuel cells, each fuel cell comprising an anode, a cathode, and an electrolyte disposed between the anode and the cathode; cross flow interconnects disposed between the fuel cells, each of the interconnects comprises an air side, an opposing fuel side, fuel holes that extend through opposing sides of the interconnect, wherein the air side each includes an air flow field and riser seal surfaces that surround the fuel holes; peripheral seals disposed between fuel sides of the interconnects and fuel sides of the fuel cells; riser seals disposed between air sides of the interconnects and air sides of the fuel cells; riser seals that completely cover the riser surfaces; and dielectric layers disposed between the riser seal surfaces and the riser seals, wherein the dielectric layers cover less than 50% of at least portions of the riser seal surfaces.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of a conventional fuel cell column, FIG. 1B is a perspective view of one counter-flow solid oxide fuel cell (SOFC) stack included in the column of FIG. 1A, and FIG. 1C is a side cross-sectional view of a portion of the stack of FIG. 1B.
FIG. 2A is a top view of the air side of a conventional interconnect of the stack of FIG. 1B, and FIG. 2B is a top view of the fuel side of the conventional interconnect.
FIG. 3A is a perspective view of a fuel cell stack, according to various embodiments of the present disclosure, FIG. 3B is an exploded perspective view of a portion of the stack of FIG. 3A, FIG. 3C is a top view of the fuel side of an interconnect included in the stack of FIG. 3A, and FIG. 3D is a schematic view of a fuel cell included in the stack of FIG. 3A.
FIGS. 4A and 4B are plan views showing, respectively, an air side and a fuel side of the cross-flow interconnect of FIG. 3C, according to various embodiments of the present disclosure.
FIG. 5A is a plan view showing the air side of the interconnect of FIG. 3C, and FIG. 5B is a plan view showing a modified version of the interconnect of FIG. 5A. FIGS. 5C and 5D are plan views showing the air side of interconnects according to various embodiments of the present disclosure.
FIG. 6A is a sectional perspective view of two interconnects of FIGS. 4A and 4B, and a fuel cell as assembled in the fuel cell stack of FIG. 3A, according to various embodiments of the present disclosure, and FIG. 6B is a top view showing the overlap of the fuel cell and seals on the fuel side of an interconnect of FIG. 6A.
FIG 7A is a top view of the fuel side of a fuel cell, according to various embodiments of the present disclosure, and FIG. 7B is a top view of the air side of the fuel cell of FIG. 7B.

### DETAILED DESCRIPTION

The various embodiments will be described in detail with reference to the accompanying drawings. The drawings are not necessarily to scale, and are intended to illustrate various features of the invention. Wherever possible, the same reference numbers will be used throughout the drawings to refer to the same or like parts. References made to particular examples and implementations are for illustrative purposes, and are not intended to limit the scope of the invention or the claims. Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

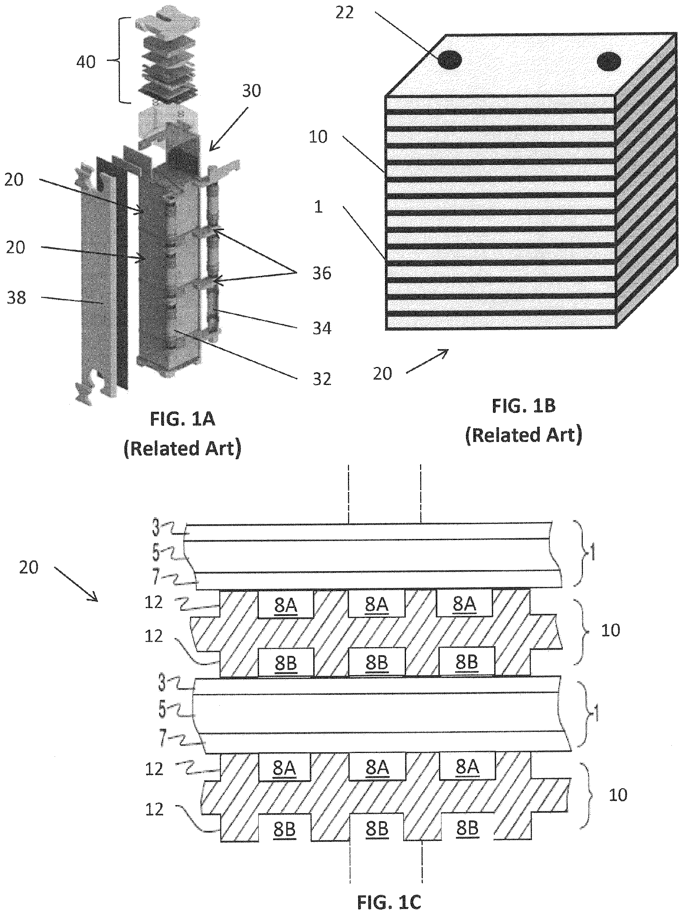

FIG. 1A is a perspective view of a conventional fuel cell column 30, FIG. 1B is a perspective view of one counter-flow solid oxide fuel cell (SOFC) stack 20 included in the column 30 of FIG. 1A, and FIG. 1C is a side cross-sectional view of a portion of the stack 20 of FIG. 1B.

Referring to FIGS. 1A and 1B, the column 30 may include one or more stacks 20, a fuel inlet conduit 32, an anode exhaust conduit 34, and anode feed/return assemblies 36 (e.g., anode splitter plates (ASP's) 36). The column 30 may also include side baffles 38 and a compression assembly 40. The fuel inlet conduit 32 is fluidly connected to the ASP's 36 and is configured to provide the fuel feed to each ASP 36, and anode exhaust conduit 34 is fluidly connected to the ASP's 36 and is configured to receive anode fuel exhaust from each ASP 36.

The ASP's 36 are disposed between the stacks 20 and are configured to provide a hydrocarbon fuel containing fuel feed to the stacks 20 and to receive anode fuel exhaust from the stacks 20. For example, the ASP's 36 may be fluidly connected to internal fuel riser holes 22 formed in the stacks 20, as discussed below.

Referring to FIG. 1C, the stack 20 includes multiple fuel cells 1 that are separated by interconnects 10, which may also be referred to as gas flow separator plates or bipolar plates. Each fuel cell 1 includes a cathode electrode 3, a solid oxide electrolyte 5, and an anode electrode 7.

Each interconnect 10 electrically connects adjacent fuel cells 1 in the stack 20. In particular, an interconnect 10 may electrically connect the anode electrode 7 of one fuel cell 1 to the cathode electrode 3 of an adjacent fuel cell 1. FIG. 1C shows that the lower fuel cell 1 is located between two interconnects 10.

Each interconnect 10 includes ribs 12 that at least partially define fuel channels 8A and air channels 8B. The interconnect 10 may operate as a gas-fuel separator that separates a fuel, such as a hydrocarbon fuel, flowing to the fuel electrode (i.e. anode 7) of one cell in the stack from oxidant, such as air, flowing to the air electrode (i.e. cathode 3) of an adjacent cell in the stack. At either end of the stack 20, there may be an air end plate or fuel end plate (not shown) for providing air or fuel, respectively, to the end electrode.

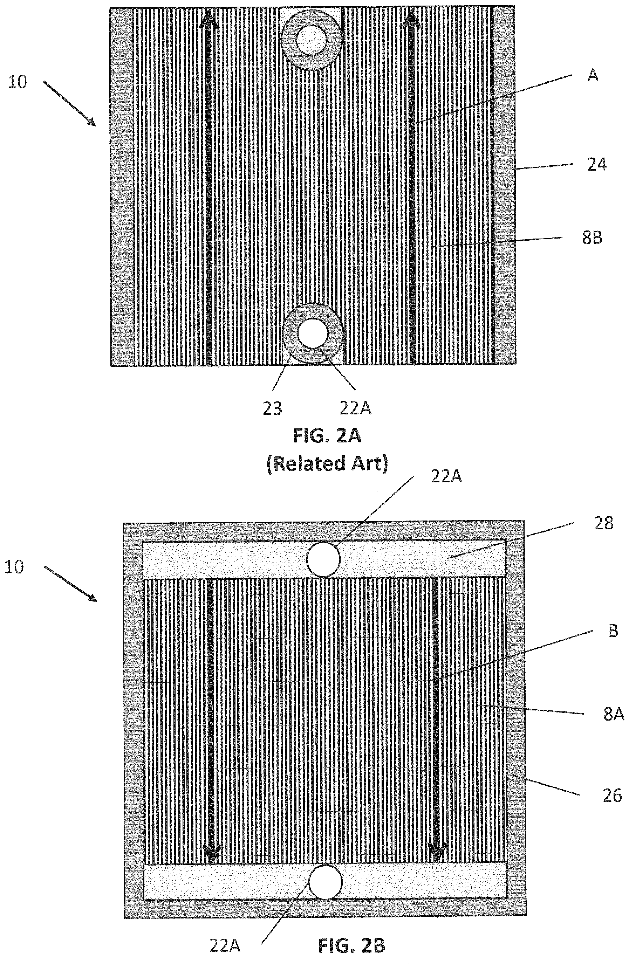

FIG. 2A is a top view of the air side of the conventional interconnect 10, and FIG. 2B is a top view of a fuel side of the interconnect 10. Referring to FIGS. 1C and 2A, the air side includes the air channels 8B. Air flows through the air channels 8B to a cathode electrode 3 of an adjacent fuel cell 1. In particular, the air may flow across the interconnect 10 in a first direction A as indicated by the arrows.

Ring seals 23 may surround fuel holes 22A of the interconnect 10, to prevent fuel from contacting the cathode electrode. Peripheral strip-shaped seals 24 are located on peripheral portions of the air side of the interconnect 10. The seals 23, 24 may be formed of a glass material. The peripheral portions may be in the form of an elevated plateau which does not include ribs or channels. The surface of the peripheral regions may be coplanar with tops of the ribs 12.

Referring to FIGS. 1C and 2B, the fuel side of the interconnect 10 may include the fuel channels 8A and fuel manifolds 28 (e.g., fuel plenums). Fuel flows from one of the fuel holes 22A, into the adjacent manifold 28, through the fuel channels 8A, and to an anode 7 of an adjacent fuel cell 1. Excess fuel may flow into the other fuel manifold 28 and then into the adjacent fuel hole 22A. In particular, the fuel may flow across the interconnect 10 in a second direction B, as indicated by the arrows. The second direction B may be perpendicular to the first direction A (see FIG. 2A).

A frame-shaped seal 26 is disposed on a peripheral region of the fuel side of the interconnect 10. The peripheral region may be an elevated plateau which does not include ribs or channels. The surface of the peripheral region may be coplanar with tops of the ribs 12.

Accordingly, a conventional counter-flow fuel cell column, as shown in FIGS 1A, 1B, 1C, 2A, and 2B, may include complex fuel distribution systems (fuel rails and anode splitter plates). In addition, the use of an internal fuel riser may require holes in fuel cells and corresponding seals, which may reduce an active area thereof and may cause cracks in the ceramic electrolytes of the fuel cells 1.

The fuel manifolds 28 may occupy a relatively large region of the interconnect 10, which may reduce the contact area between the interconnect 10 and an adjacent fuel cell by approximately 10%. The fuel manifolds 28 are also relatively deep, such that the fuel manifolds 28 represent relatively thin regions of the interconnect 10. Since the interconnect 10 is generally formed by a powder metallurgy compaction process, the density of fuel manifold regions may approach the theoretical density limit of the interconnect material. As such, the length of stroke of a compaction press used in the compaction process may be limited due to the high-density fuel manifold regions being incapable of being compacted further. As a result, the density achieved elsewhere in the interconnect 10 may be limited to a lower level by the limitation to the compaction stroke. The resultant density variation may lead to topographical variations, which may reduce the amount of contact between the interconnect 10 a fuel cell 1 and may result in lower stack yield and/or performance.

Another important consideration in fuel cell system design is in the area of operational efficiency. Maximizing fuel utilization is a key factor to achieving operational efficiency. Fuel utilization is the ratio of how much fuel is consumed during operation, relative to how much is delivered to a fuel cell. An important factor in preserving fuel cell cycle life may be avoiding fuel starvation in fuel cell active areas, by appropriately distributing fuel to the active areas. If there is a maldistribution of fuel such that some flow field channels receive insufficient fuel to support the electrochemical reaction that would occur in the region of that channel, it may result in fuel starvation in fuel cell areas adjacent that channel. In order to distribute fuel more uniformly, conventional interconnect designs include channel depth variations across the flow field. This may create complications not only in the manufacturing process, but may also require complex metrology to measure these dimensions accurately. The varying channel geometry may be constrained by the way fuel is distributed through fuel holes and distribution manifolds.

One possible solution to eliminate this complicated geometry and the fuel manifold is to have a wider fuel opening to ensure much more uniform fuel distribution across the fuel flow field. Since fuel manifold formation is a factor in density variation, elimination of fuel manifolds should enable more uniform interconnect density and permeability. Accordingly, there is a need for improved interconnects that provide for uniform contact with fuel cells, while also uniformly distributing fuel to the fuel cells without the use of conventional fuel manifolds.

Owing to the overall restrictions in expanding the size of a hotbox of a fuel cell system, there is also a need for improved interconnects designed to maximize fuel utilization and fuel cell active area, without increasing the footprint of a hotbox.

### Cross-Flow Fuel Cell Systems

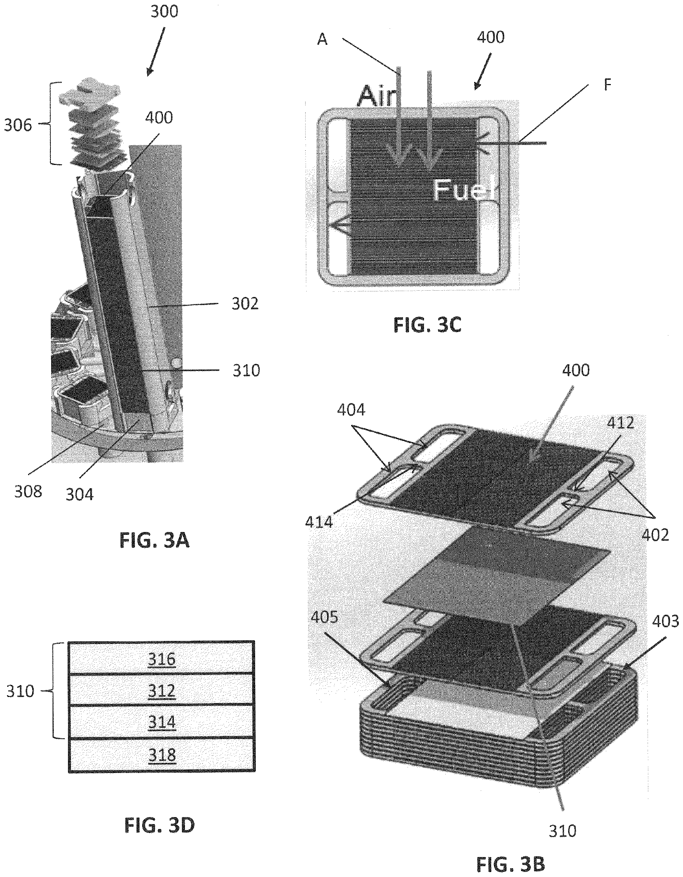

FIG. 3A is a perspective view of a fuel cell stack 300, according to various embodiments of the present disclosure, FIG. 3B is an exploded perspective view of a portion of the stack 300 of FIG. 3A, FIG. 3C is a top view of the fuel side of an interconnect 400 included in the stack 300, and FIG. 3D is a schematic view of a fuel cell included in the stack 300.

Referring to FIGS. 3A-3D, the fuel cell stack 300, which may also be referred to as a fuel cell column because it lacks ASP's, includes multiple fuel cells 310 that are separated by interconnects 400, which may also be referred to as gas flow separator plates or bipolar plates. One or more stacks 300 may be thermally integrated with other components of a fuel cell power generating system (e.g., one or more anode tail gas oxidizers, fuel reformers, fluid conduits and manifolds, etc.) in a common enclosure or "hotbox."

The interconnects 400 are made from an electrically conductive metal material. For example, the interconnects 400 may comprise a chromium alloy, such as a Cr-Fe alloy. The interconnects 400 may typically be fabricated using a powder metallurgy technique that includes pressing and sintering a Cr-Fe powder, which may be a mixture of Cr and Fe powders or an Cr-Fe alloy powder, to form a Cr-Fe interconnect in a desired size and shape (e.g., a "net shape" or "near net shape" process). A typical chromium-alloy interconnect 400 comprises more than about 90% chromium by weight, such as about 94-96% (e.g., 95%) chromium by weight. An interconnect 400 may also contain less than about 10% iron by weight, such as about 4-6% (e.g., 5%) iron by weight, may contain less than about 2% by weight, such as about zero to 1% by weight, of other materials, such as yttrium or yttria, as well as residual or unavoidable impurities.

Each fuel cell 310 may include a solid oxide electrolyte 312, an anode 314, and a cathode 316. In some embodiments, the anode 314 and the cathode 316 may be printed on the electrolyte 312. In other embodiments, a conductive layer 318, such as a nickel mesh, may be disposed between the anode 314 and an adjacent interconnect 400. The fuel cell 310 does not include through holes, such as the fuel holes of conventional fuel cells. Therefore, the fuel cell 310 avoids cracks that may be generated due to the presence of such through holes.

An upper most interconnect 400 and a lowermost interconnect 400 of the stack 300 may be different ones of an air end plate or fuel end plate including features for providing air or fuel, respectively, to an adjacent end fuel cell 310. As used herein, an "interconnect" may refer to either an interconnect located between two fuel cells 310 or an end plate located at an end of the stack and directly adjacent to only one fuel cell 310. Since the stack 300 does not include ASPs and the end plates associated therewith, the stack 300 may include only two end plates. As a result, stack dimensional variations associated with the use of intra-column ASPs may be avoided.

The stack 300 may include side baffles 302, a fuel plenum 304, and a compression assembly 306. The side baffles 302 may be formed of a ceramic material and may be disposed on opposing sides of the fuel cell stack 300 containing stacked fuel cells 310 and interconnects 400. The side baffles 302 may connect the fuel plenum 304 and the compression assembly 306, such that the compression assembly 306 may apply pressure to the stack 300. The side baffles 302 may be curved baffle plates, such each baffle plate covers at least portions of three sides of the fuel cell stack 300. For example, one baffle plate may fully cover the fuel inlet riser side of the stack 300 and partially covers the adjacent front and back sides of the stack, while the other baffle plate fully covers the fuel outlet riser side of the stack and partially covers the adjacent portions of the front and back sides of the stack. The remaining uncovered portions for the front and back sides of the stack allow the air to flow through the stack 300. The curved baffle plates provide an improved air flow control through the stack compared to the conventional baffle plates 38 which cover only one side of the stack. The fuel plenum 304 may be disposed below the stack 300 and may be configured to provide a hydrogen-containing fuel feed to the stack 300, and may receive an anode fuel exhaust from the stack 300. The fuel plenum 304 may be connected to fuel inlet and outlet conduits 308 which are located below the fuel plenum 304.

Each interconnect 400 electrically connects adjacent fuel cells 310 in the stack 300. In particular, an interconnect 400 may electrically connect the anode electrode of one fuel cell 310 to the cathode electrode of an adjacent fuel cell 310. As shown in FIG. 3C, each interconnect 400 may be configured to channel air in a first direction A, such that the air may be provided to the cathode of an adjacent fuel cell 310. Each interconnect 400 may also be configured to channel fuel in a second direction F, such that the fuel may be provided to the anode of an adjacent fuel cell 310. Directions A and F may be perpendicular, or substantially perpendicular. As such, the interconnects 400 may be referred to as cross-flow interconnects.

The interconnect 400 may include fuel holes that extend through the interconnect 400 and are configured for fuel distribution. For example, the fuel holes may include one or more fuel inlets 402 and one or more fuel outlets 404, which may also be referred to as anode exhaust outlets 404. The fuel inlets and outlets 402, 404 may be disposed outside of the perimeter of the fuel cells 310. While two of each of the fuel inlets and outlets 402, 404 are shown, it should be noted that there may be one fuel inlet 402 and one fuel outlet 404, or there may be three or more of each of the fuel inlets and outlets 402, 404. As such, the fuel cells 310 may be formed without corresponding through holes for fuel flow. The combined length of the fuel inlets 402 and/or the combined length of the fuel outlets 404 may be at least 75% of a corresponding length of the interconnect 400 e.g., a length taken in direction A.

In one embodiment, each interconnect 400 contains two fuel inlets 402 separated by a neck portion 412 of the interconnect 400, as shown in FIG. 3B. However, more than two fuel inlets 402 may be included, such as three to five inlets separated by two to four neck portions 412. In one embodiment, each interconnect 400 contains two fuel outlets 404 separated by a neck portion 414 of the interconnect 400, as shown in FIG. 3B. However, more than two fuel outlets 404 may be included, such as three to five outlets separated by two to four neck portions 414.

The fuel inlets 402 of adjacent interconnects 400 may be aligned in the stack 300 to form one or more fuel inlet risers 403. The fuel outlets 404 of adjacent interconnects 400 may be aligned in the stack 300 to form one or more fuel outlet risers 405. The fuel inlet riser 403 may be configured to distribute fuel received from the fuel plenum 304 to the fuel cells 310. The fuel outlet riser 405 may be configured to provide anode exhaust received from the fuel cells 310 to the fuel plenum 304.

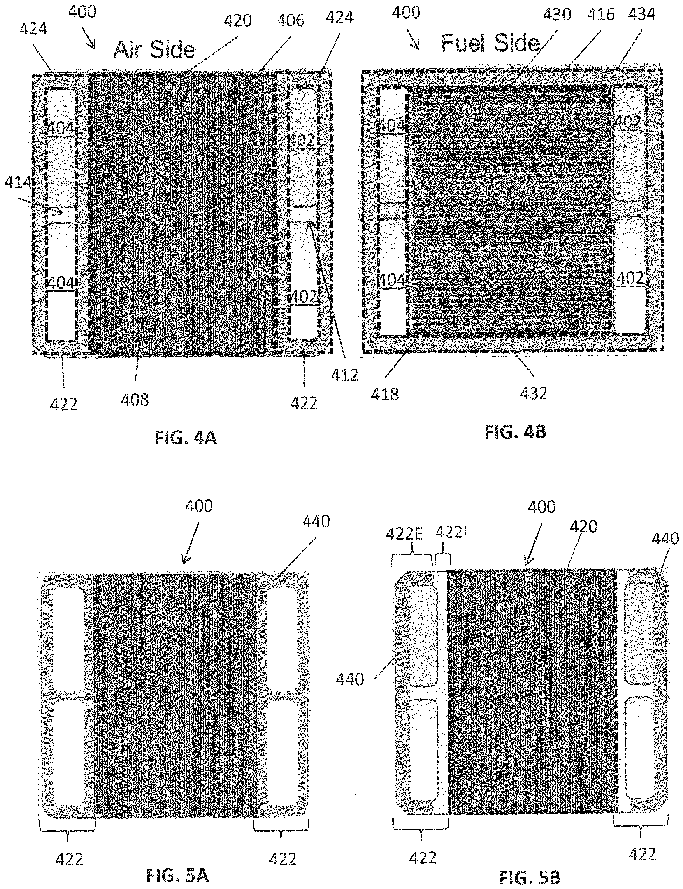

Unlike the flat related art side baffles 38 of FIG. 1A, the side baffles 302 may be curved around edges of the interconnects 400. In particular, the side baffles 302 may be disposed around the fuel inlets 402 and outlets 404 of the interconnects 400. Accordingly, the side baffles may more efficiently control air flow through air channels of the interconnects 400, which are exposed between the side baffles 302 and are described in detail with regard to FIGS. 4A and 4B.

In various embodiments, the stack 300 may include at least 30, at least 40, at least 50, or at least 60 fuel cells, which may be provided with fuel using only the fuel risers 403, 405. In other words, as compared to a conventional fuel cell system, the cross-flow configuration allows for a large number of fuel cells to be provided with fuel, without the need for ASP's or external stack fuel manifolds, such as external conduits 32, 34 shown in FIG. 1A.

Each interconnect 400 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 400 may comprise a metal (e.g., a chromium-iron alloy, such as 4-6 weight percent iron, optionally 1 or less weight percent yttrium and balance chromium alloy), and may electrically connect the anode or fuel-side of one fuel cell 310 to the cathode or air-side of an adjacent fuel cell 310. An electrically conductive contact layer, such as a nickel contact layer (e.g., a nickel mesh), may be provided between anode and each interconnect 400. Another optional electrically conductive contact layer may be provided between the cathode electrodes and each interconnect 400.

A surface of an interconnect 400 that in operation is exposed to an oxidizing environment (e.g., air), such as the cathode-facing side of the interconnect 400, may be coated with a protective coating layer in order to decrease the growth rate of a chromium oxide surface layer on the interconnect and to suppress evaporation of chromium vapor species which can poison the fuel cell cathode. Typically, the coating layer, which can comprise a perovskite such as lanthanum strontium manganite (LSM), may be formed using a spray coating or dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

FIGS. 4A and 4B are plan views showing, respectively, an air side and a fuel side of the cross-flow interconnect 400, according to various embodiments of the present disclosure. Referring to FIG. 4A, the air side of the interconnect 400 may include ribs 406 configured to at least partially define air channels 408 configured to provide air to the cathode of a fuel cell 310 disposed thereon. The air side of the interconnect 400 may be divided into an air flow field 420 including the air channels 408, and riser seal surfaces 422 disposed on two opposing sides of the air flow field 420. One of the riser seal surfaces 422 may surround the fuel inlets 402 and the other riser seal surface 422 may surround the fuel outlets 404. The air channels 408 and ribs 406 may extend completely across the air side of the interconnect 400, such that the air channels 408 and ribs 406 terminate at opposing peripheral edges of the interconnect 400. In other words, when assembled into a stack 300, opposing ends of the air channels 408 and ribs 406 are disposed on opposing (e.g., front and back) outer surfaces of the stack, to allow the blown air to flow through the stack. Therefore, the stack may be externally manifolded for air.

Riser seals 424 may be disposed on the riser seal surface 422. For example, one riser seal 424 may surround the fuel inlets 402, and one riser seal 424 may surround the fuel outlets 404. The riser seals 424 may prevent fuel and/or anode exhaust from entering the air flow field 420 and contacting the cathode of the fuel cell 310. The riser seals 424 may also operate to prevent fuel from leaking out of the fuel cell stack 100 (see FIG. 3A).

Referring to FIG. 4B, the fuel side of the interconnect 400 may include ribs 416 that at least partially define fuel channels 418 configured to provide fuel to the anode of a fuel cell 310 disposed thereon. The fuel side of the interconnect 400 may be divided into a fuel flow field 430 including the fuel channels 418, and an perimeter seal surface 432 surrounding the fuel flow field 430 and the fuel inlets and outlets 402, 404. The ribs 416 and fuel channels 418 may extend in a direction that is perpendicular or substantially perpendicular to the direction in which the air-side channels 408 and ribs 406 extend.

A frame-shaped perimeter seal 434 may be disposed on the perimeter seal surface 432. The perimeter seal 434 may be configured to prevent air entering the fuel flow field 430 and contacting the anode on an adjacent fuel cell 310. The perimeter seal 434 may also operate to prevent fuel from exiting the fuel risers 403, 405 and leaking out of the fuel cell stack 300 (see FIGS. 3A and 3B).

The seals 424, 434 may comprise a glass or ceramic seal material, as discussed in detail below. The seal material may have a low electrical conductivity. In some embodiments, the seals 424, 434 may be formed by printing one or more layers of seal material on the interconnect 400, followed by sintering.

FIG. 5A is a plan view showing the air side of the interconnect 400 without the riser seals 424, according to various embodiments of the present disclosure, and FIGS. 5B-5D are plan views showing a modified versions of the interconnect 400 of FIG. 5A.

In conventional fuel cell stacks, the fuel cell electrolytes fully cover the interconnects, such that the fuel cell electrolytes operate as dielectric layers between adjacent interconnects. In a crossflow design, portions of the interconnects 400 may be disposed outside of the perimeter of the fuel cells, such as interconnect regions corresponding to the riser seal surface 422. Electrical shorting between interconnects may potentially occur in these regions, if the stack is tilted or if seals become conductive over time. Leakage current may also lead to seal degradation over time. As such, various embodiments provide dielectric layers that protect against electrical shorting and/or seal degradation.

Referring to FIGS. 5A and 5B, the interconnect 400 may include dielectric layers 440 disposed on the riser seal surfaces 422. Herein, the dielectric layers 440 may also be referred to as corrosion barrier layers (CBLs), since the dielectric layers may reduce the diffusion of contaminants into adjacent seals. For example, as shown in FIG. 5A, each dielectric layer 440 may be annular and may cover all, or substantially all, of the corresponding riser seal surface 422. For example, in the embodiment of FIG. 5A, the dielectric layers 440 may be D-shaped and may have substantially the same shape as the riser seals 424 shown in FIG. 4A disposed thereon.

In other embodiments, as shown in FIG. 5B, the dielectric layers 440 may be C-shaped and may cover only an exterior region 422E of the corresponding riser seal surface 422, such as a portion adjacent to the outer perimeter of the interconnect 400. The C-shaped dielectric layers 440 may include a two parallel portions which extend perpendicular to the direction of the air ribs 406 and air channels 408 and a connecting portion which extends parallel to the direction of the air ribs 406 and air channels 408 and which connects the two parallel portions. The dielectric layers 440 form an electrically insulating barrier between adjacent interconnects 400 and prevent electrical shorting if a corresponding stack is tilted or if a seal becomes conductive. In the embodiment of FIG. 5B, the riser seal surfaces 422 each comprise an interior region 4221 that includes a portion of the riser seal surface 422 that is disposed closest to the corresponding air flow field 420, and an exterior region 422E that includes a portion of the riser seal surface 422 that is disposed furthest from the corresponding air flow field 420. In this embodiment, the dielectric layers cover at least 95% of each exterior region 422E and are omitted in the interior region 4221.

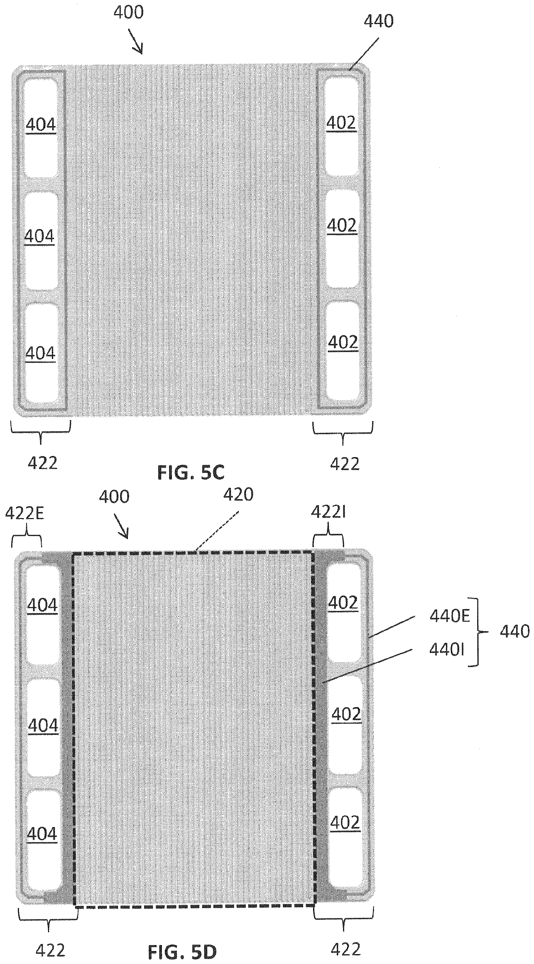

In other embodiments, as shown in FIG. 5C, the dielectric layers 440 may be D-shaped structures formed of a relatively narrow width (i.e., thin) line of seal material, such that the dielectric layers 440 cover less than 50% of the entire riser seal surface 422 that is covered by the riser seals 424, such as from about 25% to about 50% , e.g., from 30% to 45% of the surface area covered by the riser seals 424.

During sintering, the relatively narrow dielectric layer 440 may allow for an adjacent riser seal to overflow the dielectric layer 440, such that at least a portion of the riser seal material directly contacts the riser seal surface 422. As such, the relatively narrow dielectric layer 440 may allow for increased seal-to-interconnect adhesion, while still preventing electrical contact (i.e., short circuit) between adjacent interconnects 400 in the stack.

With regard to FIG. 5D, of the riser seal surfaces 422 may each have an interior region 4221 disposed between the air flow field 420 and the fuel inlets 402 or outlets 404, in addition to the exterior region 422E. The interior region 4221 may include a portion (e.g., half) of the riser seal surface 422 that is closest to the air flow field 420, and the exterior region 422E may include the remaining portion (e.g., half) of the riser seal surface 422 that is furthest from the air flow field 420. Portions of riser seals disposed on the interior regions 4221 may degrade more rapidly than portions of riser seal disposed on the exterior region 422E, if no dielectric layer 440 is utilized. Without wishing to be bound by a particular theory, it is believed that electrolytic corrosion can take place within the interior portions of the riser seals due to reactions with vapor phase products, which may result in the formation of pores/voids in the riser seals, especially in the interior portions of the riser seals over time.

Accordingly, in some embodiments dielectric layers 440 may include a relatively wide width (i.e., thick) interior portion 4401 that covers the interior region 4221, and a relatively narrow width exterior portion 440E that covers the exterior region 422E. As used with regard to FIGS. 5A - 5D, the width of the dielectric layers 440 and portions 4401 and 440E is the dimension which is parallel riser seal surface 422 (i.e., which is perpendicular to the fuel cell stack axial direction). In particular, the interior portion 4401 may cover substantially all of the interior region 4221 (e.g., at least 95% of the interior region 4221), while the exterior portion 440E may cover less than 50% of the surface of the exterior region 422E.

Covering substantially all of the interior region 4221 with the interior portion 4401 of the dielectric layer 440 may prevent and/or reduce degradation of overlapping portions of the riser seals by reducing vapor phase reactions. Covering only a portion of exterior region 422E with the exterior portion 440E of the dielectric layer may provide for increased seal-to-interconnect adhesion.

Conventional dielectric layers may include ceramic components mixed with a glass component. The glass component may be a glass material that is configured to be sintered to provide cohesion and adhesive strength. For example, the glass component may include silica glass materials or glass-ceramic materials, such as a BaO-CaO-Al₂O₃-B₂O₃-SiO₂ (BCAS) glass-ceramic material. However, the amount of the glass component included in such materials may be limited to about 15 wt.% or less, due to the relatively low dielectric strength of conventional glass component materials. In addition, the glass component may completely crystalize at relatively low temperatures. As a result, such conventional dielectric layers may lack sufficient adhesive and/or cohesive strength, due to the crystallization of the glass component, and may delaminate from adjacent seals during thermal cycling at fuel cell operating temperatures.

As such, various embodiments provide dielectric layer materials that have a dielectric strength sufficient to prevent interconnect-to-interconnect shorting (e.g., leakage currents), as well as provide sufficient seal adhesion to prevent delamination during thermal cycling.

According to various embodiments, the dielectric layers 440 may comprise a corrosion barrier material and an at least partially amorphous first glass-containing component. For example, the dielectric layers 440 may have a first glass-containing component to corrosion barrier material weight ratio ranging from about 5:95 to about 60:40, such as from about 10:90 to about 50:50. In some embodiments, the barrier material and the first glass-containing component may be present in the dielectric layers 440 as separate phases.

The first glass-containing component may include a glass or glass-ceramic material that completely or at least partially retains an amorphous/glassy state after sintering at temperatures of at least 940 °C, such as temperatures from about 950 °C to about 1050 °C. For example, the first glass-containing component may have, by volume, least 50%, such as at least 70%, at least 80%, or at least 90% of an amorphous phase after sintering at temperatures above 940 °C, for a time period of at least 15 minutes. In some embodiments, the first glass-containing component may include a barium silicate glass-containing composition, such as Schott G018-281 (a glass-ceramic sealant for SOFC applications), available from Schott AG, Mainz, Germany, a calcium-magnesium-aluminosilicate (CMAS) glass or glass-ceramic material, combinations thereof, or the like.

In some embodiments, the first glass-containing component may include the CMAS glass or glass-ceramic material that comprises, on an oxide basis, by mol%: SiO₂ in an amount ranging from about 85% to about 95%, such as from about 87% to about 93%, or about 89.2%; Al₂O₃ in an amount ranging from about 2.5% to about 6.5%, such as from about 4.0% to about 5.0%, or about 4.6%; CaO in an amount ranging from about 2.0% to about 5.0%, such as from about 3.0% to about 4.0%, or about 3.5%; and MgO in an amount ranging from about 1.2% to about 4.2%, such as from about 2.2% to about 3.2%, or about 2.7%.

The corrosion barrier material may comprise a glass ceramic material comprising a ceramic component and a second glass-containing component. For example, the ceramic component may include zircon (zirconium silicate (ZrSiO₄)), potash feldspar (KAlSi₃O₈), alumina (Al₂O3), lanthanum trisilicate (La₂Si₃O₉), silicon carbide, and/or other high-temperature resistant dielectric materials. The second glass-containing component may include silica glass materials or glass-ceramic materials, such as a BaO-CaO-Al₂O₃-B₂O₃-SiO₂ (BCAS) glass-ceramic material.

For example, the corrosion barrier material may include, based on a total weight of the corrosion barrier material: from about 25 wt.% to about 50 wt.%, such as from about 30 wt.% to about 45 wt.%, from about 35 wt.% to about 40 wt.%, or about 37.5 wt.% ZrSiO₄; from about 25 wt.% to about 50 wt.%, such as from about 30 wt.% to about 45 wt.%, from about 35 wt.% to about 40 wt.%, or about 37.5 wt.% KAlSi₃O₈; from about 2 wt.% to about 25 wt.%, such as from about 4 wt.% to about 20 wt.%, from about 5 wt.% to about 15 wt.%, or about 10 wt.% Al₂O₃; and from about 0 wt.% to about 15 wt.%, such as from about 10 wt.% to about 15 wt.%, or from about 12 to about 15 wt.% of the second glass-containing component.

In some embodiments, the second glass-containing component may comprise, on an oxide weight basis: silica (SiO₂) in an amount ranging from about 30% to about 60%, such as from about 35% to about 55%; boron trioxide (B₂O₃) in an amount ranging from about 0.5% to about 15%, such as from about 1% to about 12%; alumina (Al₂O₃) in an amount ranging from about 0.5% to about 5%, such as from about 1% to about 4%; calcium oxide (CaO) in an amount ranging from about 2% to about 30%, such as from about 5% to about 25%; barium oxide (BaO) in an amount ranging from about 0% to about 35%, such as from about 20% to about 30%; magnesium oxide (MgO) in an amount ranging from about 0% to about 25%, such as from about 5% to about 20%; strontium oxide (SrO) in an amount ranging from about 0% to about 20%, such as from about 10% to about 15%; and lanthanum oxide (La₂O₃) in an amount ranging from about 0% to about 12%, such as from about 5% to about 10%.

In some embodiments, the second glass-containing component may be omitted. For example, the first glass-containing component may be substituted for the second glass-containing component, such that the dielectric layers 440 may have a first glass-containing component to corrosion barrier material weight ratio ranging from about 15:85 to about 70:30, such as from about 20:80 to about 60:40.

In an alternative embodiment, the corrosion barrier material may comprise, on an oxide basis by mol%: SiO₂ in an amount ranging from about 30% to about 45%, such as about 35% to about 40%, or about 39%; CaO in an amount ranging from about 23% to about 33%, such as from about 25% to about 30%, or about 27%; MgO in an amount ranging from about 15% to about 25%, such as from about 18% to about 20%, or about 19%; Al₂O₃ in an amount ranging from about 6% to about 7%, such as about 6.5%; B₂O₃ in an amount ranging from about 4% to about 5%, such as about 4.5%; La₂O₃ in an amount ranging from about 0.5% to about 5%, such as from about 1.5% to about 3.5%, or about 2%; and ZrO₂ in an amount ranging from about 0.5% to about 5%, such as about 1.5% to about 3.5%, or about 2%. The corrosion barrier material may also comprise trace amounts of impurities, such as Na₂O, P₂O₅, SrO, BaO, Li₂O, and/or K₂O. In some embodiments, the above corrosion barrier material may be at least 90% crystalline (e.g., may include at least 90% or at least 95% of one or more crystalline phases by volume). For example, the corrosion barrier material may comprise lanthanum trisilicate (La₂Si₃O₉) as a primary crystal phase. A primary crystal phase is the crystal phase having the largest volume percent of all crystal phases, and may comprise at least 50 volume percent of all crystal phases.

In other embodiments, the corrosion barrier material may comprise, on an oxide basis by mol%: SiO₂ in an amount ranging from about 45% to about 55%, such as about 47% to about 53%, or about 50.5%; CaO in an amount ranging from about 0.5% to about 3%, such as from about 1.5% to about 2.5%, or about 2.0%; MgO in an amount ranging from about 1% to about 4%, such as from about 1% to about 2%, or about 1.5%; Al₂O₃ in an amount ranging from about 2% to about 3%, such as about 2.5%; B₂O₃ in an amount ranging from about 10% to about 16%, such as from about 11% to about 13%, or about 12%; BaO in an amount ranging from about 15 to about 30%, such as from about 18% to about 24%, or about 21.5%; La₂O₃ in an amount ranging from about 5% to about 10%, such as from about 7% to about 9%, or about 8%; and ZrO₂ in an amount ranging from about 0.5% to about 3%, such as about 1.5% to about 3.5%, or about 2%. The corrosion barrier material may also comprise trace amounts of impurities, such as Na₂O, P₂O₅, SrO, BaO, Li₂O, and/or K₂O. In some embodiments, the above corrosion barrier material may be at least 90% crystalline (e.g., may include at least 90% or at least 95% of one or more crystalline phases). For example, the above corrosion barrier material may comprise lanthanum trisilicate (La₂Si₃O₉) as a primary crystal phase. The crystalline corrosion barrier material may also include one or more secondary crystal phases such as zircon (ZrSiO₄) and/or sanbornite (BaSi₂O₅).

The dielectric layer 440 may also include ceramic support particles (e.g., hard, round ceramic particles) configured to operate as a physical support to maintain separation between adjacent interconnects 400. For example, the support particles may be configured to maintain a minimum distance between adjacent interconnects 400 that is sufficient to prevent and/or reduce the generation of a leakage current between the interconnects 400, which may occur if the glass phase of an adjacent seal is excessively compressed. The support particles may comprise alumina, zircon (zirconium silicate (ZrSiO₄)), stabilized zirconia (e.g., yttria-stabilized zirconia), or any combination thereof. The support particles may have an average particle size ranging from about 5 µm to about 50 µm, such as from about 10 µm to about 30 µm.

In some embodiments, some or all of a LSM/MCO coating may be removed on the air side of the interconnect 400 in the area around the riser seal 424, to prevent Mn diffusion from the LSM/MCO material into the riser seal 424, and thereby prevent the riser seal 424 from becoming conductive. In other embodiments, the riser seals 424 may be formed of crystalline glass or glass-ceramic materials that do not react with the LSM/MCO coating, such as the borosilicate glass-ceramic compositions discussed above.

The dielectric layer 440 can be formed from freestanding layers, such as a tape cast and sintered layer, and may be disposed between interconnects 400 during fuel cell stack assembly. In other embodiments, the dielectric layers 440 may be formed by dispersing a dielectric material in an ink, paste, or slurry form, and subsequently screen printed, pad printed, aerosol sprayed onto the interconnect 400. In some embodiments, the dielectric layer 440 may be formed by a thermal spraying process, such as an atmospheric plasma spray (APS) process. For example, the dielectric layer 440 may include alumina deposited by the APS process.

The dielectric layer 440 may be deposited directly on the interconnect 400. For example, the dielectric layer 440 may be disposed directly on the riser seal surfaces 422 (i.e., parts of the interconnect 400 around the fuel inlets and outlets 402, 404 in areas that will be covered by the riser seals 424 and that are not covered by the LSM/MCO coating, except for a small area of overlap (e.g., seam) where the dielectric layer 440 overlaps with a LSM/MCO coating where the riser seal surface 422 meets the air flow field 420, so as to prevent Cr evaporation from an exposed surface of the interconnect 400. Thus, the LSM/MCO coating is located on the interconnect 400 surface in the air flow field 420 containing air channels 408 and ribs 406, but not in the riser seal surface 422 of the interconnect 400 surrounding the fuel inlets and outlets 402, 404. The dielectric layer 440 is located on the riser seal surface of the interconnect 400 in the area surrounding the fuel inlets and outlets 402, 404 that is not covered by the LSM/MCO coating and on the edge of the LSM/MCO coating in the air flow field 420 adjacent to the riser seal surface 422. Alternatively, the dielectric layer 440 may be omitted and there is no dielectric layer 440 deposited around the fuel riser openings.

The fuel cell stack and/or components thereof may be conditioned and/or sintered. Stack sintering may include processes for heating, melting and/or reflowing a glass or glass-ceramic seal precursor materials to form seals in a fuel cell stack, which may be performed at elevated temperature (e.g., 600-1000°C) in air and/or inert gas. "Conditioning" includes processes for reducing a metal oxide (e.g., nickel oxide) in an anode electrode to a metal (e.g., nickel) in a cermet electrode (e.g., nickel and a ceramic material, such as a stabilized zirconia or doped ceria) and/or heating the stack 300 during performance characterization/testing, and may be performed at elevated temperature (e.g., 750-900°C) while fuel flows through the stack. The sintering and conditioning of the fuel cell stack 300 may be performed during the same thermal cycle (i.e., without cooling the stack to room temperature between sintering and conditioning).

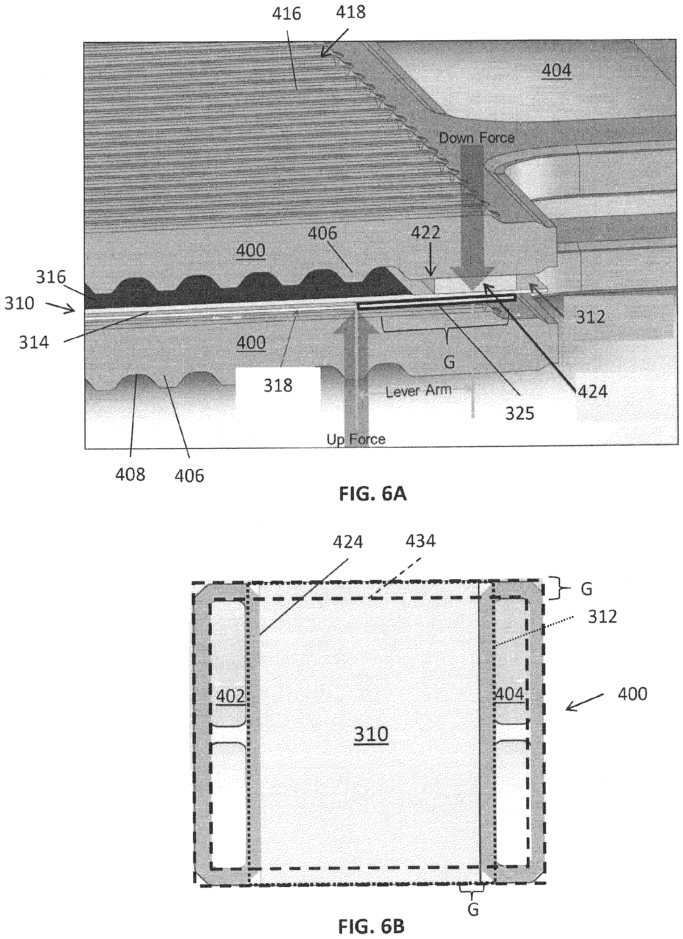

FIG. 6A is a sectional perspective view of two interconnects 400 of FIGS. 4A and 4B, and a fuel cell 310 as assembled in the fuel cell stack 300 of FIG. 3A, according to various embodiments of the present disclosure. FIG. 6B is a top view showing the overlap of the fuel cell 310, and seals 424, 434, on the fuel side of an interconnect 400 of FIG. 6A.

Referring to FIGS. 4A, 4B, 6A, and 6B, when assembled in a fuel cell stack, the fuel cell 310 is disposed between the interconnects 400, so as to face the air flow field 420 and the fuel flow field 430 of each interconnect 400. The riser seals 424 may contact first opposing sides of the air side of the fuel cell 310, and the perimeter seal 434 may contact second opposing sides of the fuel side of the fuel cell 310. Portions of the perimeter seal 434 adjacent the fuel inlets and outlets 402, 404 may overlap with corresponding portions of the riser seals 424. In addition, portions of the fuel cell 310 may be disposed between overlapping portions of the seals 424, 434, such as at corners of the fuel cell 310. As such, a combined thickness of the overlapped portions of the fuel cell 310 and seals 424, 434 may be greater than a thickness of the overlapped portions of the seals 424, 434.

Accordingly, stress may be applied to the corners of the fuel cells 310, during assembly and/or during sintering, which may result in damage to the fuel cells 310, such as cracked corners. Therefore, various embodiments of the present disclosure provide methods and stack configurations that are configured to protect the fuel cells 310 from damage during assembly and/or sintering processes.

In addition, since the seals 424, 434 overlap the corners of the fuel cell 310, gaps G may be formed along the perimeter of the fuel cell 310 and between the corners of the fuel cells 310, below each of the riser seals 424 (e.g., below the electrolyte 312) and above the perimeter seal 434. When the stack 300 is compressed, a down force may be transmitted through the interconnects 400 and seals 424, 430, and into the unsupported edges of the fuel cell 310 adjacent the gaps G, which may create a lever arm effect, due to the adjacent gaps G.

According to various embodiments of the present disclosure, in order to support the edges of the electrolyte 312, the conductive layer 318 (e.g., nickel mesh) may be extended into the gaps G. In some embodiments, the anode 314 and/or cathode 316 may also be extended to cover the electrolyte below the riser seals 424, in combination with extending the conductive layer 318 into the gaps G. In other embodiments, one or more electrolyte reinforcement layers 325 may be formed on one or both sides of the electrolyte 312 below the riser seals 424.

The electrolyte reinforcement layers 325 may be formed of a dielectric material, such as a ceramic material including yttria-stabilized zirconia (YSZ), (e.g., 3% yttria-stabilized zirconia (3YSZ)), scandia-stabilized zirconia (SSZ), magnesia, zirconia, and/or alumina. In one embodiment, the electrolyte reinforcement layers 325 may include from about 65 wt.% to about 85 wt.%, such as about 75 wt.%, 3YSZ and from about 35 wt.% to about 15 wt.%, such as about 25 wt.%, alumina.

In other embodiments, the electrolyte reinforcement layers 325 may include a dielectric material that includes YSZ, alumina, and a zircon additive. For example, the electrolyte reinforcement layers 325 may include from about 40 wt.% to about 60 wt.%, such as about 50 wt.%, 3YSZ, from about 15 wt.% to about 35 wt.%, such as about 25 wt.%, alumina, and from about 15 wt.% to about 35 wt.%, such as about 25 wt.%, ZrSiO₄.

The electrolyte reinforcement layers 325 may also include a dielectric material that includes a sintering aid, such as a metal or metal oxide material, such as Ti, Mo, W, Mg, Hf, Rh, Co, Ni, Fe, Mn, Cu, Sn, oxides thereof, and combinations thereof. For example, the electrolyte reinforcement layers 325 may include from about 0.1 to about 80 wt % (e.g., 50-75 wt %) of stabilized zirconia, about 0.1 to about 60 wt % (e.g., 20-45 wt %) of alumina, about 0.1 to about 30 wt % (e.g., 1-5 wt %) of the sintering aid (e.g., metal or metal oxide material).

The electrolyte reinforcement layer 325 may have substantially the same thickness as the anode 314 and/or cathode 316, and may further support the edge of the fuel cell 310 in conjunction with the conductive layer 318. In some embodiments, the electrolyte reinforcement layer 325 may be disposed on the cathode-side of the fuel cell 310 and may be formed of a chromium getter material, such as manganese cobalt oxide spinel. As such, the electrolyte reinforcement layer 325 may be configured to remove chromium from air supplied to the fuel cell 310.

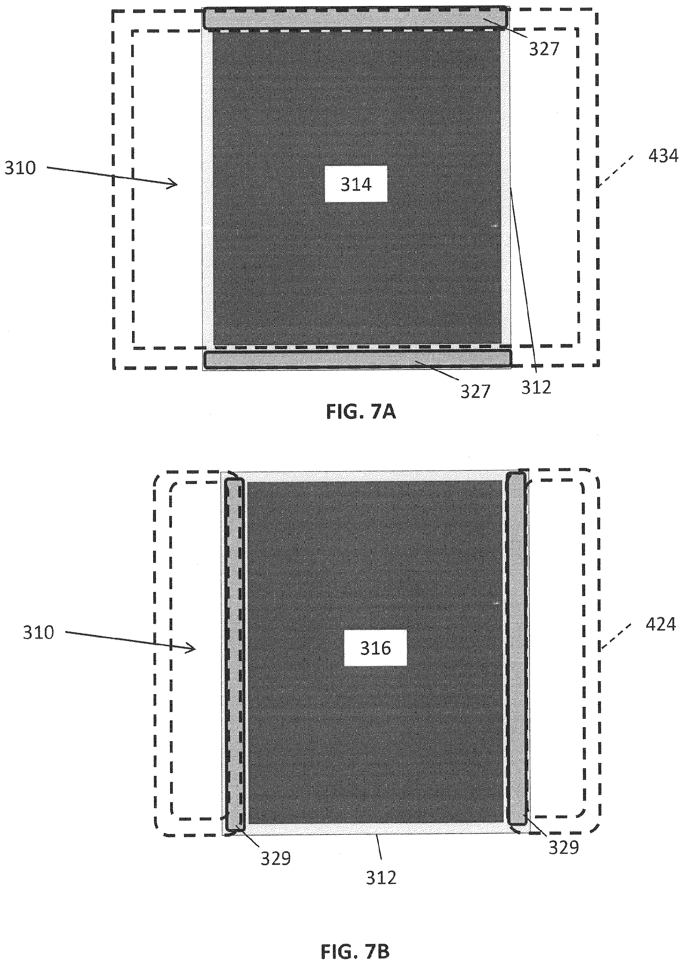

FIG 7A is a top view of the fuel side of a fuel cell 310, according to various embodiments of the present disclosure, and FIG. 7B is a top view of the air side of the fuel cell 310 of FIG. 7B. Referring to FIGS. 7A and 7B, in some embodiments, dielectric electrolyte reinforcement layers 327 may be formed on the fuel side of the electrolyte 312, where the perimeter seal 434 overlaps with the electrolyte 312. In particular, the electrolyte reinforcement layers 327 may be disposed directly on the fuel side of the electrolyte 312. Dielectric electrolyte reinforcement layers 329 may also be formed on the air side of the electrolyte 312, where the riser seals 424 overlap with the electrolyte 312. In particular, the electrolyte reinforcement layers 329 may be disposed directly on the air side of the electrolyte 312. Dielectric electrolyte reinforcement layers 329 may be formed in addition to or instead of the dielectric electrolyte reinforcement layers 327.

In particular, the electrolyte reinforcement layers 327, 329 may be formed by printing a dielectric material on the electrolyte 312. For example, the dielectric material may be printed on the electrolyte 312 at a thickness ranging from about 5 µm to about 35 µm, such as from about 10 µm to about 30 µm.

The dielectric material may be similar to the dielectric material of the electrolyte reinforcement layer 325. For example, the dielectric material may include YSZ, (e.g., 3YSZ), SSZ, magnesia, zirconia, ZrSiO₄, and/or alumina. In one embodiment, the reinforcement layers 327, 329 may include, based on the total weight of the electrolyte reinforcement layers 327, 329, from about 65 wt.% to about 85 wt.%, such as from about 70 wt.% to about 80 wt.%, or about 75 wt.%, 3YSZ, and from about 15 wt.% to about 35 wt.%, such as from about 20 wt.% to about 30 wt.%, or about 25 wt.%, alumina.

In other embodiments, the electrolyte reinforcement layers 327, 329 may include, based on the total weight of the electrolyte reinforcement layers 327, 329, from about 40 wt.% to about 60 wt.%, such as about 50 wt.%, 3YSZ, from about 15 wt.% to about 35 wt.%, such as about 25 wt.%, alumina, and from about 15 wt.% to about 35 wt.%, such as about 25 wt.%, ZrSiO₄.

After printing, the electrolyte reinforcement layers 327, 329 may be sintered. In particular, since the dielectric material may be free of a glass material, the electrolyte reinforcement layers 327, 329 may be sintered at a higher temperature, such as a temperature ranging from about 1100 °C to about 1300 °C, such as a temperature ranging from about 1150 °C to about 1250 °C, or about 1200 °C. As such, the electrolyte reinforcement layers 327, 329 may be completely or substantially completely crystalline. For example, the electrolyte reinforcement layer 327, 329 may comprise, by volume be at least 90%, such as at least 95%, or at least 99% of a crystalline phase, which may provide the reinforcement layers 327, 329 with improved dielectric and mechanical properties, as compared to compositions that include glass materials.

### Seal Materials

Referring again to FIGS. 4A and 4B, the seals 424, 434 may be configured to provide numerous different functions in a fuel cell system. For example, the seals 424, 434 may operate as a hermetic bonding agent between adjacent interconnects 400, so as to achieve high fuel utilisations and minimal fuel leakage. The seals 424, 434 may also be configured to be sufficiently compliant to compensate for stresses arising from thermal gradients during fuel cell operations. The seals 424, 434 may also be configured to have a CTE that matches the CTE's of the interconnects 400 and/or fuel cells. Further, the seals 424, 434 may be configured to withstand high operating temperatures, over long periods of time, and to have a high chemical stability with respect to other stack components, in oxidizing and reducing atmospheres.

Accordingly, the seals 424, 434 may be formed of a glass or glass/ceramic seal material that provides good wettability and flowability and retains an amorphous phase to provide self-healing during thermal cycling. In some embodiments, the seal material may have a coefficient or thermal expansion (CTE) that closely matched the CTE of the interconnects 400 and fuel cells. For example, the seal material may have a CTE that is within +/- 10%, or +/- 5% of the CTE of fuel cell stack interconnects and/or fuel cells. For example, the seal material may have a CTE ranging from about 9 parts per million (ppm)/°K to about 11 ppm/°K (where 1 ppm = 0.0001%), when used in a fuel cell stack including interconnects 400 and fuel cells 310 having a CTE of about 10 ppm/°K.

The seal material may be chemically inert with respect to materials such as zirconia-base electrolyte materials, chromium-containing interconnect materials (such as Cr-Fe alloys containing 4 to 6 wt.% Fe and balance chromium and impurities), and coatings including manganese oxides, cobalt oxides, or the like, which may chemically react with many otherwise suitable seal materials. The seal material may also have a sintering temperature of less than about 1000 °C, and may be stable at SOFC system operating temperatures (e.g., between 700 and 900 °C), when exposed to air and/or hydrogen. The seal material may have a high dielectric constant, such that the seal material may be configured to electrically isolate adjacent interconnects 400.

In some embodiments, the seals 424, 434 may be formed of a seal material that includes a primary component that comprises Si, Ca, Mg and optionally Al. In some embodiments, the primary component precursor material may include SiO₂, CaO, MgO, and optionally Al₂O₃. The seal material may also include an optional secondary component. The secondary component precursor material may comprise non-zero amounts (e.g., at least 0.3 mol.%) of B₂O₃, BaO, SrO, La₂O₃, ZrO₂, and/or Y₂O₃. In some embodiments, the seal material may include oxides of Si, Ca, Al, and Mg as the primary component and may optionally include B₂O₃, BaO, SrO, La₂O₃, ZrO₂, Y₂O₃, or any combination thereof, as the secondary component. In some embodiments, the seal material may omit the secondary component (i.e., include 0 to less than 0.3 mol percent of the secondary component).

For example, the seal precursor material may include the primary component in an amount ranging from about 70 mol% to about 100 mol%, such as from about 80 mol% to 100 mol%, from about 90 mol% to about 100 mol%, or from about 92.5 mol% to about 100 mol%, and a balance of the secondary component. For example, the seal material may include from about 20 mol% to 0 mol%, from about 10 mol% to about 0.3 mol%, or from about 7.5 mol% to about 0.85 mol% of the secondary component.

In various embodiments, the seal material may include crystalline and amorphous phases after the precursor material has been applied to the interconnect and sintered. For example, the seal material may include a crystalline phase that comprises at least one of diopside ((CaO)₁₋ₓ(MgO)ₓ)₂(SiO₂)₂, where 0.3≤ x ≤ 1.0, such as (CaMgSi₂O₆)), akermanite (Ca₂MgSi₂O₇), monticellite (CaMgSiO₄), wollastonite (CaSiO₃), anorthite (CaAl₂Si₂O₈) and/or magnesium aluminum silicate crystals. In one embodiment, the crystalline phase comprises primarily (e.g., at least 50 molar percent of the crystalline phase, such as 50 to 99 molar percent, such as 60 to 95 molar percent) diopside, with small quantities (e.g., 1 to 40, such as 5 to 20 molar percent) of anorthite, wollastonite, and magnesium aluminium silicate of the general formula MgOAl₂O₃4SiO₂.

In some embodiments, the seal material may include, by volume, from about 55% to about 85% of a crystalline phase and from about 45% to about 25% of an amorphous phase, such as from about 60% to about 80% of a crystalline phase and is from about 40% to about 20% of an amorphous phase, from about 65% to about 75% of a crystalline phase and from about 35% to about 25% of an amorphous phase, or about 70% of a crystalline phase and about 30% of an amorphous phase.

In some embodiments, the seal precursor material may include, on an oxide basis, by mol%: SiO₂ in an amount ranging from about 25% to about 55%, such as from about 30% to about 50%, or from about 32% to about 50%; CaO in an amount ranging from about 20% to about 45%, such as from about 21% to about 43%, or from about 22% to about 41%; MgO in an amount ranging from about 5% to about 30%, such as from about 6% to about 27%, from about 7% to about 27%, or from about 5% to 25%; and Al₂O₃ in an amount ranging from about 0% to about 15%, such as from about 0.5% to about 15%, or from about 1% to about 14%.

In some embodiments, the seal precursor material may include a CMAS material that comprises, on an oxide basis, by mol%: SiO₂ in an amount ranging from about 85% to about 95%, such as from about 87% to about 93%, or about 89.2%; Al₂O₃ in an amount ranging from about 2.5% to about 6.5%, such as from about 4.0% to about 5.0%, or about 4.6%; CaO in an amount ranging from about 2.0% to about 5.0%, such as from about 3.0% to about 4.0%, or about 3.5%; and MgO in an amount ranging from about 1.2% to about 4.2%, such as from about 2.2% to about 3.2%, or about 2.7%.

The foregoing method descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

Further, any step or component of any embodiment described herein can be used in any other embodiment.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

**The invention also refers to the following embodiments, wherein the term "claim" means "embodiment":**
1. A fuel cell stack comprising:
   stacked solid oxide fuel cells;
   interconnects disposed between the fuel cells; and
   dielectric layers disposed on the interconnects, the dielectric layers comprising a first glass-containing component and a corrosion barrier material, wherein:
      the dielectric layer has a first glass-containing component to corrosion barrier material weight ratio ranging from about 5:95 to about 60:40,
      the first glass-containing component is at least 50% amorphous, after sintering at a temperature ranging from about 950 °C to about 1050 °C, for a time period of at least 15 minutes, and
      the corrosion barrier material comprises zirconium silicate (ZrSiO₄)), potash feldspar (KAlSi₃O₈), alumina (Al₂O3), lanthanum trisilicate (La₂Si₃O₉), silicon carbide, or any combination thereof.
2. The fuel cell stack of claim 1, wherein the first glass-containing component comprises a barium silicate glass or a calcium-magnesium-aluminosilicate (CMAS) material which comprises, on an oxide basis by mol%:
   SiO₂ in an amount ranging from about 87% to about 93%;
   Al₂O₃ in an amount ranging from about 4.0% to about 5.0%;
   CaO in an amount ranging from about 3.0% to about 4.0%; and
   MgO in an amount ranging from about 2.2% to about 3.2%.
3. The fuel cell stack of claim 1, wherein the corrosion barrier material comprises, on an oxide basis by mol%:
   SiO₂ in an amount ranging from about 30% to about 45%;
   CaO in an amount ranging from about 23% to about 33%;
   MgO in an amount ranging from about 15% to about 25%;
   Al₂O₃ in an amount ranging from about 6% to about 7%;
   B₂O₃ in an amount ranging from about 4% to about 5%;
   La₂O₃ in an amount ranging from about 0.5% to about 5%; and
   ZrO₂ in an amount ranging from about 0.5% to about 5%.
4. The fuel cell stack of claim 1, wherein the corrosion barrier material comprises, on an oxide basis by mol%:
   SiO₂ in an amount ranging from about 45% to about 55%;
   CaO in an amount ranging from about 0.5% to about 3%;
   MgO in an amount ranging from about 1% to about 4%;
   Al₂O₃ in an amount ranging from about 2% to about 3%;
   B₂O₃ in an amount ranging from about 4% to about 5%;
   BaO in an amount ranging from about 15% to about 30%;
   La₂O₃ in an amount ranging from about 5% to about 10%; and
   ZrO₂ in an amount ranging from about 0.5% to about 3%.
5. The fuel cell stack of claim 1, wherein the corrosion barrier material comprises, based on a total weight of the corrosion barrier material:
   from about 30 wt.% to about 45 wt.% zirconium silicate;
   from about 30 wt.% to about 45 wt.% potash feldspar;
   from about 4 wt.% to about 20 wt.% alumina; and
   and from about 10 wt.% to about 15 wt.% of a second glass-containing component comprising a BaO-CaO-Al₂O₃-B₂O₃-SiO₂ (BCAS) glass-ceramic material.
6. The fuel cell stack of claim 1, wherein the dielectric layer further comprises support particles comprising alumina, zircon, or stabilized zirconia, the support particles having an average particle size ranging from about 10 µm to about 30 µm.
7. The fuel cell stack of claim 1, wherein:
   the interconnects each comprise an air side, an opposing fuel side, and fuel holes that extend through opposing sides of the interconnect;
   the air sides each include an air flow field and riser seal surfaces that surround the fuel holes;
   the fuel cell stack further comprises riser seals that completely cover the riser seal surfaces; and
   the dielectric layers are disposed between the riser seal surfaces and the riser seals.
8. The fuel cell stack of claim 7, wherein the dielectric layers cover less than 50% of the riser seal surfaces.
9. The fuel cell stack of claim 7, wherein:
   the riser seal surfaces each comprise:
      an interior region that includes a portion of the riser seal surface that is disposed closest to the corresponding air flow field; and
      an exterior region that includes a portion of the riser seal surface that is disposed furthest from the corresponding air flow field; and
   the dielectric layers cover at least 95% of each interior region and less than 50% of each exterior region.
10. The fuel cell stack of claim 7, further comprising electrolyte reinforcement layers disposed directly on electrolytes of the solid oxide fuel cells below the riser seals, wherein the electrolyte reinforcement layers comprise at least one of yttria-stabilized zirconia (YSZ), scandia-stabilized zirconia (SSZ), magnesia, zirconia, ZrSiO₄, alumina, or a combination thereof.
11. A fuel cell stack comprising:
   stacked solid oxide fuel cells, each fuel cell comprising an anode, a cathode, and an electrolyte disposed between the anode and the cathode;
   cross flow interconnects containing fuel holes and disposed between the fuel cells;
   peripheral seals disposed between fuel sides of the interconnects and fuel sides of the fuel cells;
   riser seals surrounding the fuel holes disposed between air sides of the interconnects and air sides of the fuel cells; and
   electrolyte reinforcement layers disposed directly on the electrolytes and comprising at least one of yttria-stabilized zirconia (YSZ), scandia-stabilized zirconia (SSZ), magnesia, zirconia, ZrSiO₄, alumina, or a combination thereof.
12. The fuel cell stack of claim 11, wherein the wherein the electrolyte reinforcement layers comprise, based on the total weight of the electrolyte reinforcement layers:
   from about 65 wt.% to about 85 wt.% of 3% yttria-stabilized zirconia (3YSZ); and
   from about 15 wt.% to about 35 wt.% alumina.
13. The fuel cell stack of claim 11, wherein the electrolyte reinforcement layers comprise, based on the total weight of the electrolyte reinforcement layers:
   from about 40 wt.% to about 60 wt.% of 3% yttria-stabilized zirconia (3YSZ);
   from about 15 wt.% to about 35 wt.% alumina, and
   from about 15 wt.% to about 35 wt.% ZrSiO₄.
14. The fuel cell stack of claim 11, wherein the electrolyte reinforcement layers comprise, by volume, at least 90% of a crystalline phase.
15. The fuel cell stack of claim 11, wherein the electrolyte reinforcement layers are disposed between the riser seals and the electrolytes.
16. The fuel cell stack of claim 11, wherein the electrolyte reinforcement layers are disposed between the peripheral seals and the electrolytes.
17. A fuel cell stack comprising:
   stacked solid oxide fuel cells, each fuel cell comprising an anode, a cathode, and an electrolyte disposed between the anode and the cathode;
   cross flow interconnects disposed between the fuel cells, each of the interconnects comprises an air side, an opposing fuel side, fuel holes that extend through opposing sides of the interconnect, wherein the air side includes an air flow field and riser seal surfaces that surround the fuel holes;
   peripheral seals disposed between fuel sides of the interconnects and fuel sides of the fuel cells;
   riser seals disposed between air sides of the interconnects and air sides of the fuel cells and that completely cover the riser seal surfaces; and
   dielectric layers disposed between the riser seal surfaces and the riser seals,
   wherein the dielectric layers cover less than 50% of at least portions of the riser seal surfaces.
18. The fuel cell stack of claim 17, wherein the dielectric layers cover less than 50% of the entire riser seal surfaces.
19. The fuel cell stack of claim 17, wherein:
   the riser seal surfaces each comprise:
      an interior region that includes a portion of the riser seal surface that is disposed closest to the corresponding air flow field; and
      an exterior region that includes a portion of the riser seal surface that is disposed furthest from the corresponding air flow field; and
   the dielectric layers cover at least 95% of each interior region and less than 50% of each exterior region.
20. The fuel cell stack of claim 19, wherein:
   the interior region includes a half of the riser seal surface that is disposed closest to the corresponding air flow field; and
   the exterior region that includes another half of the riser seal surface that is disposed furthest from the corresponding air flow field.
21. A fuel cell stack dielectric layer, comprising:
   a first glass-containing component; and
   a corrosion barrier material,
   wherein:
      the dielectric layer has a first glass-containing component to corrosion barrier material weight ratio ranging from about 5:95 to about 60:40,
      the first glass-containing component is at least 50% amorphous, after sintering at a temperature ranging from about 950 °C to about 1050 °C, for a time period of at least 15 minutes, and
      the corrosion barrier material comprises a lanthanum trisilicate (La₂Si₃O₉) primary crystal phase.
22. The fuel cell stack dielectric layer of claim 21, wherein the first glass-containing component comprises, on an oxide basis by mol%:
   SiO₂ in an amount ranging from about 87% to about 93%;
   Al₂O₃ in an amount ranging from about 4.0% to about 5.0%;
   CaO in an amount ranging from about 3.0% to about 4.0%; and
   MgO in an amount ranging from about 2.2% to about 3.2%.
23. The fuel cell stack dielectric layer of claim 21, wherein the corrosion barrier material comprises, on an oxide basis by mol%:
   SiO₂ in an amount ranging from about 30% to about 45%;
   CaO in an amount ranging from about 23% to about 33%;
   MgO in an amount ranging from about 15% to about 25%;
   Al₂O₃ in an amount ranging from about 6% to about 7%;
   B₂O₃ in an amount ranging from about 4% to about 5%;
   La₂O₃ in an amount ranging from about 0.5% to about 5%; and
   ZrO₂ in an amount ranging from about 0.5% to about 5%.
24. The fuel cell stack dielectric layer of claim 21, wherein the corrosion barrier material comprises, on an oxide basis by mol%:
   SiO₂ in an amount ranging from about 45% to about 55%;
   CaO in an amount ranging from about 0.5% to about 3%;
   MgO in an amount ranging from about 1% to about 4%;
   Al₂O₃ in an amount ranging from about 2% to about 3%;
   B₂O₃ in an amount ranging from about 4% to about 5%;
   BaO in an amount ranging from about 15% to about 30%;
   La₂O₃ in an amount ranging from about 5% to about 10%; and
   ZrO₂ in an amount ranging from about 0.5% to about 3%.
25. A fuel cell stack comprising:
   stacked solid oxide fuel cells;
   interconnects disposed between the fuel cells; and
   the fuel cell stack dielectric layers of claim 21 disposed on the interconnects.

## Claims

1. A fuel cell stack comprising:
stacked solid oxide fuel cells;
interconnects disposed between the fuel cells; and
dielectric layers disposed on the interconnects, the dielectric layers comprising a first glass-containing component and a corrosion barrier material, wherein:
the dielectric layer has a first glass-containing component to corrosion barrier material weight ratio ranging from about 5:95 to about 60:40,
the first glass-containing component is at least 50% amorphous, after sintering at a temperature ranging from about 950 °C to about 1050 °C, for a time period of at least 15 minutes, and
the corrosion barrier material comprises zirconium silicate (ZrSiO₄)), potash feldspar (KAlSi₃O₈), alumina (Al₂O₃), lanthanum trisilicate (La₂Si₃O₉), silicon carbide, or any combination thereof.

2. The fuel cell stack of claim 1, wherein the first glass-containing component comprises a barium silicate glass or a calcium-magnesium-aluminosilicate (CMAS) material which comprises, on an oxide basis by mol%:
SiO₂ in an amount ranging from about 87% to about 93%;
Al₂O₃ in an amount ranging from about 4.0% to about 5.0%;
CaO in an amount ranging from about 3.0% to about 4.0%; and
MgO in an amount ranging from about 2.2% to about 3.2%.

3. The fuel cell stack of claim 1, wherein the corrosion barrier material comprises, on an oxide basis by mol%:
SiO₂ in an amount ranging from about 30% to about 45%;
CaO in an amount ranging from about 23% to about 33%;
MgO in an amount ranging from about 15% to about 25%;
Al₂O₃ in an amount ranging from about 6% to about 7%;
B₂O₃ in an amount ranging from about 4% to about 5%;
La₂O₃ in an amount ranging from about 0.5% to about 5%; and
ZrO₂ in an amount ranging from about 0.5% to about 5%.

4. The fuel cell stack of claim 1, wherein the corrosion barrier material comprises, on an oxide basis by mol%:
SiO₂ in an amount ranging from about 45% to about 55%;
CaO in an amount ranging from about 0.5% to about 3%;
MgO in an amount ranging from about 1% to about 4%;
Al₂O₃ in an amount ranging from about 2% to about 3%;
B₂O₃ in an amount ranging from about 4% to about 5%;
BaO in an amount ranging from about 15% to about 30%;
La₂O₃ in an amount ranging from about 5% to about 10%; and
ZrO₂ in an amount ranging from about 0.5% to about 3%.

5. The fuel cell stack of claim 1, wherein the corrosion barrier material comprises, based on a total weight of the corrosion barrier material:
from about 30 wt.% to about 45 wt.% zirconium silicate;
from about 30 wt.% to about 45 wt.% potash feldspar;
from about 4 wt.% to about 20 wt.% alumina; and
and from about 10 wt.% to about 15 wt.% of a second glass-containing component comprising a BaO-CaO-Al₂O₃-B₂O₃-SiO₂ (BCAS) glass-ceramic material.

6. The fuel cell stack of claim 1, wherein the dielectric layer further comprises support particles comprising alumina, zircon, or stabilized zirconia, the support particles having an average particle size ranging from about 10 µm to about 30 µm.

7. The fuel cell stack of claim 1, wherein:
the interconnects each comprise an air side, an opposing fuel side, and fuel holes that extend through opposing sides of the interconnect;
the air sides each include an air flow field and riser seal surfaces that surround the fuel holes;
the fuel cell stack further comprises riser seals that completely cover the riser seal surfaces; and
the dielectric layers are disposed between the riser seal surfaces and the riser seals.

8. The fuel cell stack of claim 7, wherein the dielectric layers cover less than 50% of the riser seal surfaces.

9. The fuel cell stack of claim 7, wherein:
the riser seal surfaces each comprise:
an interior region that includes a portion of the riser seal surface that is disposed closest to the corresponding air flow field; and
an exterior region that includes a portion of the riser seal surface that is disposed furthest from the corresponding air flow field; and
the dielectric layers cover at least 95% of each interior region and less than 50% of each exterior region; and
further comprising electrolyte reinforcement layers disposed directly on electrolytes of the solid oxide fuel cells below the riser seals, wherein the electrolyte reinforcement layers comprise at least one of yttria-stabilized zirconia (YSZ), scandia-stabilized zirconia (SSZ), magnesia, zirconia, ZrSiO₄, alumina, or a combination thereof.

10. The fuel cell stack of claim 1, wherein the corrosion barrier material comprises the lanthanum trisilicate (La₂Si₃O₉) as a primary crystal phase.

11. A fuel cell stack comprising:
stacked solid oxide fuel cells, each fuel cell comprising an anode, a cathode, and an electrolyte disposed between the anode and the cathode;
cross flow interconnects containing fuel holes and disposed between the fuel cells;
peripheral seals disposed between fuel sides of the interconnects and fuel sides of the fuel cells;
riser seals surrounding the fuel holes disposed between air sides of the interconnects and air sides of the fuel cells; and
electrolyte reinforcement layers disposed directly on the electrolytes and comprising at least one of yttria-stabilized zirconia (YSZ), scandia-stabilized zirconia (SSZ), magnesia, zirconia, ZrSiO₄, alumina, or a combination thereof.

12. The fuel cell stack of claim 11, wherein:
the electrolyte reinforcement layers comprise, based on the total weight of the electrolyte reinforcement layers:
from about 65 wt.% to about 85 wt.% of 3% yttria-stabilized zirconia (3YSZ), and from about 15 wt.% to about 35 wt.% alumina; or
from about 40 wt.% to about 60 wt.% of 3% yttria-stabilized zirconia (3YSZ), from about 15 wt.% to about 35 wt.% alumina, and from about 15 wt.% to about 35 wt.% ZrSiO₄;
the electrolyte reinforcement layers comprise, by volume, at least 90% of a crystalline phase;
the electrolyte reinforcement layers are disposed between the electrolytes and at least one of the riser seals and the peripheral seals.

13. A fuel cell stack comprising:
stacked solid oxide fuel cells, each fuel cell comprising an anode, a cathode, and an electrolyte disposed between the anode and the cathode;
cross flow interconnects disposed between the fuel cells, each of the interconnects comprises an air side, an opposing fuel side, fuel holes that extend through opposing sides of the interconnect, wherein the air side includes an air flow field and riser seal surfaces that surround the fuel holes;
peripheral seals disposed between fuel sides of the interconnects and fuel sides of the fuel cells;
riser seals disposed between air sides of the interconnects and air sides of the fuel cells and that completely cover the riser seal surfaces; and
dielectric layers disposed between the riser seal surfaces and the riser seals,
wherein the dielectric layers cover less than 50% of at least portions of the riser seal surfaces.

14. The fuel cell stack of claim 13, wherein the dielectric layers cover less than 50% of the entire riser seal surfaces.

15. The fuel cell stack of claim 13, wherein:
the riser seal surfaces each comprise:
an interior region that includes a portion of the riser seal surface that is disposed closest to the corresponding air flow field; and
an exterior region that includes a portion of the riser seal surface that is disposed furthest from the corresponding air flow field;
the dielectric layers cover at least 95% of each interior region and less than 50% of each exterior region;
the interior region includes a half of the riser seal surface that is disposed closest to the corresponding air flow field; and
the exterior region that includes another half of the riser seal surface that is disposed furthest from the corresponding air flow field.
